# EUROPEAN PATENT SPECIFICATION

(11) **EP 3 173 273 B1**
(45) Date of publication and mention of the grant of the patent: **20.06.2018**
(21) Application number: 16200482.4
(22) Date of filing: 24.11.2016
(51) Int. Cl.: B60K 13/04, B62D 43/04, B62D 25/08

(54) **VEHICLE BODY STRUCTURE**
FAHRZEUGAUFBAUSTRUKTUR
CARROSSERIE DE VÉHICULE

(30) Priority: 24.11.2015 JP 2015228354
(43) Date of publication of application: 31.05.2017
(73) Proprietor: MITSUBISHI JIDOSHA KOGYO KABUSHIKI KAISHA, Minato-ku Tokyo 108-8410 (JP)
(72) Inventor: ITAYA, Daisuke, Tokyo 108-8410 (JP)
(74) Representative: Regimbeau

(56) References cited:
- EP-A2- 2 865 571
- DE-A1-102007 019 912
- DE-A1-102008 020 213
- DE-A1-102014 004 384
- DE-A1-102014 110 880
- JP-A- 2008 273 372

## Description

### FIELD

The present invention relates to a vehicle body structure equipped with a tank of additive for exhaust purification.

### BACKGROUND

Conventionally, in vehicles equipped with an exhaust purification system that reduces and purifies the exhaust gas components, a vehicle equipped with a tank of the additive having a reduction action on purification target substance has been known. If the purification target substance is nitrogen oxides (NOx), additive such as aqueous urea solution or aqueous ammonia solution is stored inside the tank. Further, the arrangement position of the tank, for example, is suggested to be set on a vehicle body bottom as an external space of a vehicle interior or the inside of the body panel (for example, the inner side of an outer panel). By such a layout, a decline in vehicle interior comfortability due to leakage of additive is prevented (see JP 4826612 B1, JP 4924352 B1, JP 5194543 B1, and JP 2008-273372 A). DE 102014110880 A1, which comprises all the features mentioned in the preamble of claim 1, DE 102007019912 A1, DE 102014004384 A1, DE 102008020213 A1, and EP 2865571 A2 disclose a structure including a tank for storing solution used for a vehicle.

However, by providing the tank at the bottom of the vehicle body, chipping (stepping-stone) from the road surface or contact with the road surface easily occurs, and the protection of the tank may be lowered. Also, even if the tank is provided inside the body panel, the protection of the tank may be degraded depending on the stiffness and strength of the body panel. Meanwhile, although it is also possible to improve the protection of the tank by adding a protective member around the tank, there is a need to reduce the volume of the tank by the attachment of the protective member, and the utilization efficiency of the space is lowered. In addition, the vehicle body weight or the vehicle cost increases by the protective member.

### SUMMARY

### TECHNICAL PROBLEMS

The present invention has been made in view of the aforementioned problems, and an object thereof is to provide a vehicle body structure capable of improving the protection of the tank, while saving a space. Further, without being limited to this object, another object of the present invention is to obtain the function and effect that are not obtained by conventional techniques as a function and effect derived from each configuration illustrated in "DESCRIPTION OF EMBODIMENTS" to be described later.

### SOLUTION TO PROBLEMS

According to the present invention, a vehicle body structure as defined by the accompanying claims is provided.

The present application also discloses the followings aspects (1) to (7).
(1) There is provided a vehicle body structure equipped with a frame and a body, which includes a spare tire that is fixed to the frame; and a tank for storing an additive for exhaust purification of a vehicle that is disposed between the frame and an outer panel forming an outer surface of the body, the tank being disposed behind a wheel house of the vehicle and above a bottom surface of the spare tire.
   The tank is preferably disposed on the side of the spare tire.
(2) The vehicle body structure preferably further includes a guard bar that extends in a vehicle width direction behind and below the tank and is fixed to the frame.
   The guard bar is preferably disposed behind the spare tire.
(3) The vehicle body structure preferably further includes a bracket that supports the tank to the frame.
   The bracket is preferably disposed on the side of the spare tire.
(4) The vehicle body structure preferably further includes a bumper that extends in the vehicle width direction behind the guard bar, and the tank is preferably disposed above the bottom surface of the bumper.
   The bottom surface of the bumper is preferably disposed above the guide bar.
(5) The vehicle body structure preferably further includes an exhaust pipe that is disposed on a side opposite to the tank in the vehicle width direction across the spare tire.
(6) The vehicle body structure preferably further includes a water injection port that is disposed on a same side of the vehicle as the side where the tank is disposed, and is connected to an interior of the tank in a communicating state.
(7) The vehicle body structure preferably further includes a splash shield that is provided on an inner surface of the wheel house to form an opening through which the tank may pass in front of the tank; and a skirt panel that blocks the opening.
   The skirt panel preferably functions as a lid member for opening and closing the outlet of the tank.

### ADVANTAGEOUS EFFECTS

By disposing the tank behind the wheel house and above the bottom surface of the spare tire, it is possible to enhance the protection of the tank, while saving the space.

### BRIEF DESCRIPTION OF DRAWINGS

The nature of this invention, as well as other objects and advantages thereof, will be explained in the following with reference to the accompanying drawings, in which like reference characters designate the same or similar parts throughout the figures and wherein:
Fig. 1 is a side view illustrating a side of a vehicle (a side view without an outer panel) to which a vehicle body structure of an embodiment is applied.
Fig. 2 is a bottom view of the vehicle body structure (a view taken from an arrow A of Fig. 1).
Fig. 3 is a cross-sectional view illustrating the vehicle body structure (a cross-sectional view taken from a line B-B of Fig. 1).
Fig. 4 is a top view in which a frame of the vehicle is viewed from the top.
Fig. 5 is a diagram illustrating a removal work of the tank.

### DESCRIPTION OF EMBODIMENTS

A vehicle body structure according to an embodiment will be described with reference to the accompanying drawings. The embodiment described below is merely an example and is not intended to exclude various modifications and applications of techniques that have not been described in the following embodiment. Each configuration of the present embodiment can be embodied by various modifications without departing from the spirit. In addition, each configuration may be selected if necessary or may be appropriately combined.

### [1. Configuration]

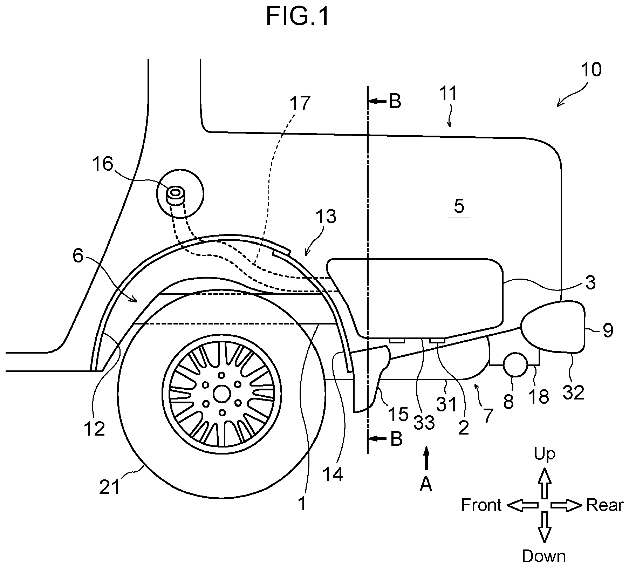

A vehicle body structure of the present embodiment is applied to a vehicle 10 illustrated in Fig. 1. The vehicle 10 is a pick-up truck type SUV (Sport Utility Vehicle) equipped with a urea SCR system. The vehicle 10 includes a vehicle lower side frame, and a vehicle upper side body, and as its vehicle body structure, a separate frame structure in which the frame and the body are separated from each other is employed. On the front side of the frame of the vehicle 10, a box-like cab (vehicle interior or vehicle cabin) on which an occupant gets is disposed, and a platform 11 is disposed on the rear side thereof.

The vehicle 10 is ordinarily equipped with a tank 3 that stores an additive for exhaust purification (for example, an aqueous urea solution, aqueous ammonia solution or the like). The urea SCR system is a kind of exhaust purification systems for purifying nitrogen oxide (NOx) contained in the exhaust gas of the engine. In the urea SCR system of the present embodiment, the aqueous urea solution is injected to the upstream side of a NOx selective reduction catalyst interposed on an exhaust passage, and NOx is reduced to nitrogen on the catalyst, using ammonia generated by the hydrolysis of urea as a reducing agent. This kind of the urea SCR system is widely used in vehicles, working machines, vessels and power plants equipped with a diesel engine or a lean-burn engine.

A pair of side members 1 that serves as a frame is provided on the lower side of the vehicle 10. The side members 1 are hollow tubular structural members which are disposed at intervals in a vehicle width direction (a left-right direction), and extend in a vehicle length direction (a front-rear direction) of the vehicle 10. An arrangement direction of the side members 1 is substantially horizontal. The cab (vehicle interior) as one of the body parts of the vehicle 10 or the platform 11 is mounted on the side members 1 via a vibration damping mount member.

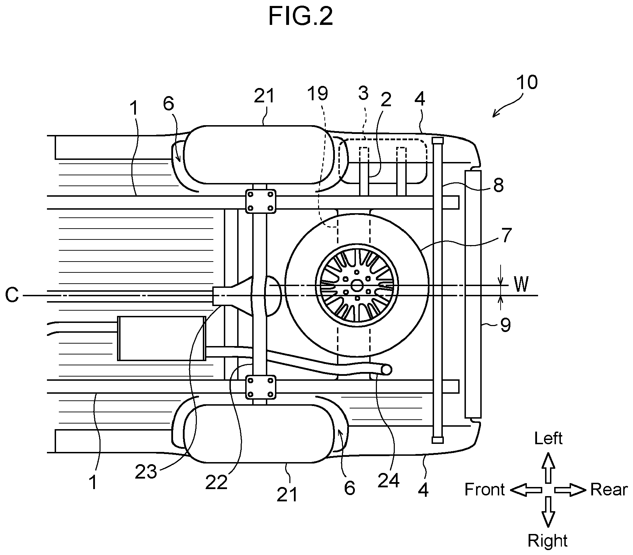

As illustrated in Figs. 1 and 2, a spare tire 7, a guard bar 8 and a bumper 9 are provided on the lower side of the platform 11 of the vehicle 10. The spare tire 7 is fixed to a spare tire bracket 19 disposed behind an axle 22 of the rear wheels 21 so as to be attachable and detachable via a fixture. The spare tire bracket 19 is a member that is attached to extend between the left and right side members 1.

A position in the front-rear direction of the spare tire 7 is set at a position on the front side of the vehicle 10 as much as possible, within a range that does not interfere with the axle 22 and a differential unit 23 of the rear wheels 21. Further, the position in the left-right direction of the spare tire 7 is set so that a predetermined interval is secured with respect to the exhaust pipe 24. Fig. 2 illustrates the vehicle 10 in which the exhaust pipe 24 is disposed to be biased to the right side from a vehicle body center line C, and the spare tire 7 is disposed to be biased to the left side from the vehicle body center line C by a dimension W.

The guard bar 8 is a member that extends substantially horizontally toward the left-right direction behind the spare tire 7, and is firmly fixed to each of the left and right side members 1 via a guard bar bracket 18. The main role of the guard bar 8 is to prevent the penetration into the vehicle body bottom, while absorbing the impact force at the time of contact or collision with another vehicle or an obstacle. Therefore, the guard bar 8 is preferably disposed at a position closer to the rear end of the vehicle 10. In the example illustrated in Figs. 1, 2 and 4, the guard bar 8 is disposed slightly in front of the bumper 9 that is attached to the rear end of the platform 11. Each of the both left and right ends of the guard bar 8 is stretched to the outside of the pair of side members 1 so that almost the entire rear end of the vehicle 10 is protected. Further, as illustrated in Fig. 1, the guard bar 8 is located slightly below the bottom surface 32 of the bumper 9.

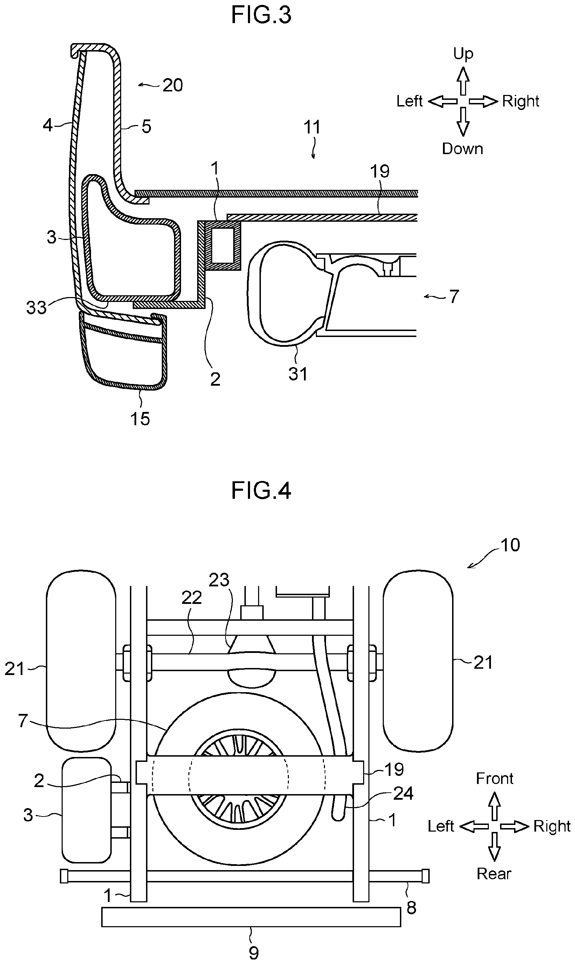

On the left and right sides of the platform 11, the side gate 20 is erected from the platform floor surface, and a rear gate is erected behind the platform 11 as one of the body parts. As illustrated in Fig. 3, the side gate 20 is formed by combining the outer panel 4 as an exterior material that forms an outer surface of the platform 11, and an inner panel 5 that forms an inner wall (an inner surface) of the platform 11. Between the outer panel 4 and the inner panel 5, a gap corresponding to the thickness of the side gate 20 is provided, and a reinforcing member (not illustrated) is interposed. Further, the lower end side of the inner panel 5 is joined with a floor panel that forms the platform floor surface.

As illustrated in Fig. 3, the tank 3 which stores the additive is disposed in the space from the inside of the side gate 20 to its bottom, and fixed to the side member 1 via the tank bracket 2. The tank 3 of this embodiment is disposed between the side member 1 and the outer panel 4 behind the wheel house 6 in which the left rear wheel 21 is housed. The tank bracket 2 having a substantially L-shaped cross-section supports the tank 3 from the lower side by a portion extending in the horizontal direction, and its installation position is set on the side of the spare tire 7. Therefore, the tank 3 is disposed on the side (left side in the example illustrated in Fig. 3) of the spare tire 7.

As illustrated in Fig. 3, the shape of the top of the tank 3 is formed in a tapered shape corresponding to the gap shape between the outer panel 4 and the inner panel 5. The position (position in the height direction) of the bottom surface 33 of the tank 3 is set above the bottom surface 31 of the spare tire 7 and above the bottom surface 32 of the bumper 9. As illustrated in Fig. 1, the position of the tank 3 in the side view of the vehicle 10 is set in front of and above the guard bar 8. As a result, the contact between the bottom surface 33 of the tank 3 and the road surface is prevented at the time of running on a step or a rough road, and the protection of the tank 3 is improved. Further, the lower end of the outer panel 4 covers the lower side of the tank 3 and extends to the inside of the vehicle 10. Thus, the bottom surface 33 of the tank 3 is also covered with the outer panel 4, thereby improving the protection of the tank 3.

A splash shield 12 is mounted to the inner surface of the wheel house 6 which is located in front of the tank 3. The splash shield 12 is a protective member for protecting the frame and the body from small stones and mud splashed by the rear wheels 21, and is formed in an arc shape corresponding to the contour shape of the rear wheels 21 in a side view of the vehicle 10. However, as illustrated in Fig. 1, the portion from the front to the top of the rear wheel 21 is covered with the splash shield 12, an opening 13 is formed on the rear side thereof, and the opening 13 is blocked by a skirt panel 14.

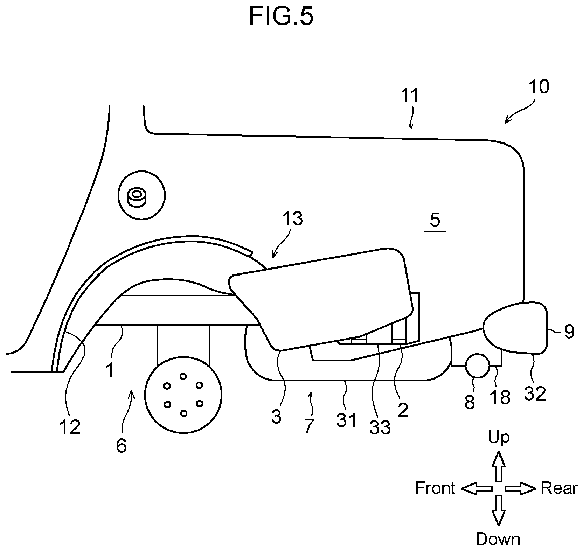

The opening 13 is disposed in front of the tank 3, and is formed in a size that allows the tank 3 to pass therethrough. The skirt panel 14 is a protective member that blocks the opening 13 in a freely opening and closing manner, and is fixed to the splash shield 12, the outer panel 4, the inner panel 5 and the like using the fasteners. The skirt panel 14 is detachable. Further, a mud guard 15 is detachably attached to the bottom of the skirt panel 14. At the time of the attaching work or the detaching work of the tank 3, as illustrated in Fig. 5, by detaching the rear wheel 21, the skirt panel 14 and the mud guard 15, the tank 3 can be taken in and out of the inside of the wheel house 6.

Among the two sides of the vehicle 10, on one side (left side) on which the tank 3 is disposed, a urea water injection port 16 (a water injection port) connected in a state of communicating with the interior of the tank 3 is provided. Further, a water injection pipe 17 connects the urea water injection port 16 and the tank 3. The water injection pipe 17 is a hollow hose for replenishing the aqueous urea solution to the interior of the tank 3. As illustrated in Fig. 1, the position of the urea water injection port 16 is set above the wheel house 6. Accordingly, the distance between the tank 3 and the urea water injection port 16 becomes relatively shorter, and the pipe length of the water injection pipe 17 is shortened. Further, the connection location between the tank 3 and the water injection pipe 17 is set at a position where the hand reaches from the inside of the wheel house 6 in a state of opening the opening 13.

### [2. Action and Effect]

(1) In the aforementioned vehicle body structure, the tank 3 is disposed between the side member 1 and the outer panel 4, behind the wheel house 6 and above the bottom surface 31 of the spare tire 7. Thus, it is possible to improve the chipping resistance of the tank 3, it is possible to reduce the possibility of contact with the road surface, and it is possible to effectively utilize the free space. In particular, since the tank 3 is disposed above the bottom surface 31 of the spare tire 7, it is possible to reliably prevent the contact between the bottom surface 33 of the tank 3 and the road surface at the time of running on a step or a rough road. Accordingly, it is possible to enhance the protection of the tank 3, while saving the space.
   Further, since the tank 3 is disposed on the left side of the spare tire 7, when an external force (side collision load) is applied from the side of the vehicle 10, it is possible to elastically support the tank 3 with the spare tire 7. Further, when the tank 3 is laid out on the spare tire 7 (for example, see JP 5194543 B1), because it is difficult to ensure the dimension in the height direction of the tank 3, in some cases, the detection accuracy of the residual quantity of the tank detected by the residual quantity sensor may decrease, or the detection itself may not be performed. In contrast, if the tank 3 is laid out on the side of the spare tire 7, because it is possible to ensure a dimension in the height direction of the tank 3, it is possible to improve the detection accuracy of the residual quantity of the tank detected by the residual quantity sensor. Further, by disposing the tank 3 in the empty space behind the wheel house 6, the tank 3 does not protrude toward the vehicle body center line C side from the wheel house 6, and it is possible to save space.
(2) As illustrated in Fig. 1, in the aforementioned vehicle body structure, the guard bar 8 is provided behind and below the tank 3. Thus, it is possible to more reliably prevent the contact between the bottom surface 33 of the tank 3 and the road surface at the time of running on a step or a rough road, and it is possible to enhance the protection of the tank 3. Further, because the guard bar 8 is disposed behind the spare tire 7, even if an external force (a rear collision load or a rear-end collision load) acts from the rear of the vehicle 10, it is possible to protect the spare tire 7 with the guard bar 8.
(3) As illustrated in Fig. 3, the tank 3 is supported by the side member 1 via the tank bracket 2. Accordingly, as compared to the case of fixing the tank 3 to the outer panel 4 or the inner panel 5, the support state of the tank 3 can be set firmly. In addition, because the tank bracket 2 is disposed on the side of the spare tire 7, a structure in which the tank bracket 2 is hardly influenced by the external force from the side or the rear of the vehicle 10 and is hardly detached from the side member 1 is provided. Therefore, it is possible to more reliably hold the support state of the tank 3, and it is possible to enhance the protection of the tank 3.
(4) As illustrated in Fig. 1, the bumper 9 is provided behind the guard bar 8, and the tank 3 is disposed above the bottom surface 32 of the bumper 9. Thus, it is possible to more reliably prevent the contact between the bottom surface 33 of the tank 3 and the road surface at the time of running on a step or a rough road, and it is possible to enhance the protection of the tank 3. Further, since the bottom surface 32 of the bumper 9 is disposed above the guard bar 8, even when a large load which deforms the guard bar 8 is applied from the bottom of the vehicle 10, the load is supported by the bottom surface 32 of the bumper 9 and is not transmitted to the tank 3. Accordingly, it is possible to further improve the protection of the tank 3.
(5) As illustrated in Figs. 2 and 3, the tank 3 is disposed on the opposite side to the exhaust pipe 24 across the spare tire 7. In other words, the tank 3 is disposed on the opposite side to the exhaust pipe 24 with respect to the spare tire 7. This makes it possible to protect the tank 3 from the exhaust heat, thereby preventing the occurrence of thermal damage.
(6) As illustrated in Fig. 1, the urea water injection port 16 is provided on the same side (left side)as the side where the tank 3 is disposed, among the two sides of the vehicle 10. Thus, it is possible to shorten the piping length (the length of the water injection pipe 17) from the urea water injection port 16 to the tank 3.
(7) As illustrated in Figs. 1 and 5, on the inner surface of the wheel house 6 which is disposed in front of the tank 3, the splash shield 12 which forms an opening 13, and a skirt panel 14 which blocks the opening 13 in a freely opening and closing manner are provided. In other words, the skirt panel 14 opens and closes the opening 13. By disposing the tank 3 behind the wheel house 6 having such a structure, it is possible to detach the tank 3 to the wheel house 6 side, and it is possible to enhance the maintainability of the tank 3, while saving the space.

### [3. Modified Example]

Although the layout of the tank 3 in the vehicle 10 of the separate frame structure has been described in the aforementioned embodiment, it is also possible to apply the layout of the tank 3 to a monocoque-body vehicle. For example, the spare tire 7 and the guard bar 8 may be fixed to the frame of the monocoque body in which the frame and the body are integrated. Further, in the aforementioned embodiment, as illustrated in Fig. 1, the vehicle 10 in which the spare tire 7 is disposed to be biased to the left side of the vehicle 10 has been described as an example, but the position in the vehicle width direction of the spare tire 7 may be arbitrarily set. Further, the same also applies to the arrangement of the tank 3, and the tank 3 may be disposed on the right side of the vehicle 10. At least, by disposing the tank 3 between the side member 1 and the outer panel 4 behind the wheel house 6 and above the bottom surface 31 of the spare tire 7, the same effects as the aforementioned embodiment can be exhibited.

As illustrated in Fig. 3, although the aforementioned embodiment illustrates a configuration in which the top of the tank 3 is formed in a tapered shape in accordance with the gap between the outer panel 4 and the inner panel 5, the specific shape of the tank 3 may be arbitrarily set. For example, in consideration of workability when the tank 3 is taken in and out of the opening 13, the upper surface of the tank 3 may be formed flat, and the layout in the height direction may be changed such that the upper surface is positioned below the platform floor surface. At least, by providing a structure in which the opening 13 is formed by the splash shield 12 on the inner surface of the wheel house 6 in front of the tank 3 and the opening is blocked by the skirt panel 14, the same effects as the aforementioned embodiment can be exhibited.

Further, although the aforementioned embodiment illustrates the vehicle 10 in which a single guard bar 8 is provided, the number of guard bars 8 is arbitrary. For example, a plurality of guard bars 8 may be disposed in parallel in the front-rear direction in accordance with the size of the tank 3 (the dimension in the front-rear direction). By increasing the number of guard bars 8, it is possible to further enhance the protection of the tank 3.

The invention thus described, it will be obvious that the same may be varied in many ways as defined by the following claims.

### REFERENCE SIGNS LIST

- 1: side member (frame)
- 2: tank bracket (bracket)
- 3: tank
- 4: outer panel
- 5: inner panel
- 6: wheel house
- 7: spare tire
- 8: guard bar
- 9: bumper
- 10: vehicle
- 11: platform (body)
- 12: splash shield
- 13: opening
- 14: skirt panel
- 15: mud guard
- 16: urea water injection port (water injection port)
- 17: water injection tube
- 18: guard bar bracket
- 19: spare tire bracket
- 20: side gate
- 21: rear wheel
- 22: axle
- 23: differential device
- 24: exhaust pipe
- 31: bottom surface of spare tire
- 32: bottom surface of bumper
- 33: bottom surface of tank
- C: vehicle body center line

## Claims

1. A vehicle body structure equipped with a frame (1) and a body (11), comprising:
a spare tire (7) that is fixed to the frame (1); and
a tank (3) for storing an additive for exhaust purification of a vehicle (10) that is disposed between the frame (1) and an outer panel (4) forming an outer surface of the body (11), the tank (3) being disposed behind a wheel house (6) of the vehicle (10) and above a bottom surface (31) of the spare tire (7),
**characterized by** further comprising:
a splash shield (12) that is provided on an inner surface of the wheel house (6) to form an opening (13) through which the tank (3) can pass in front of the tank (3); and
a skirt panel (14) that opens and closes the opening (13).

2. The vehicle body structure according to claim 1, further comprising:
a guard bar (8) that extends in a vehicle width direction behind and below the tank (3) and is fixed to the frame (1).

3. The vehicle body structure according to claim 1 or 2, further comprising:
a bracket (2) that supports the tank (3) to the frame (1).

4. The vehicle body structure according to any one of claims 1 to 3, further comprising:
a bumper (9) that extends in the vehicle width direction behind the guard bar (8),
**characterized in that** the tank (3) is disposed above a bottom surface (32) of the bumper (9).

5. The vehicle body structure according to any one of claims 1 to 4, further comprising:
an exhaust pipe (24) that is disposed on a side opposite to the tank (3) in the vehicle width direction with the spare tire (7) interposed therebetween.

6. The vehicle body structure according to any one of claims 1 to 5, further comprising:
a water injection port (16) that is disposed on a same side of the vehicle (10) as the side where the tank (3) is disposed, and is connected to an interior of the tank (3) in a communicating state.

## Patentansprüche

1. Fahrzeugaufbaustruktur, die mit einem Rahmen (1) und einem Aufbau (11) ausgerüstet ist, die Folgendes umfasst:
einen Ersatzreifen (7), der an dem Rahmen (1) befestigt ist; und
einen Tank (3) zum Lagern eines Zusatzstoffs zur Reinigung der Abgase eines Fahrzeugs (10), der zwischen dem Rahmen (1) und einem Außenblech (4) angeordnet ist, das eine Außenfläche des Aufbaus (11) bildet, wobei der Tank (3) hinter einem Radkasten (6) des Fahrzeugs (10) und über einer unteren Fläche (31) des Ersatzreifens (7) angeordnet ist,
**dadurch gekennzeichnet, dass** sie ferner Folgendes umfasst:
ein Radkasten-Innenblech (12), das an einer Innenfläche des Radkastens (6) bereitgestellt ist, um eine Öffnung (13) zu bilden, die der Tank (3) vor dem Tank (3) durchqueren kann; und
eine Schürze (14), die die Öffnung (13) öffnet und schließt.

2. Fahrzeugaufbaustruktur nach Anspruch 1, die ferner Folgendes umfasst:
eine Schutzstange (8), die sich in einer FahrzeugBreitenrichtung hinter und unter dem Tank (3) erstreckt und an dem Rahmen (1) befestigt ist.

3. Fahrzeugaufbaustruktur nach Anspruch 1 oder 2, die ferner Folgendes umfasst:
einen Träger (2), der den Tank (3) an dem Rahmen (1) unterstützt.

4. Fahrzeugaufbaustruktur nach einem der Ansprüche 1 bis 3, die ferner Folgendes umfasst:
einen Stoßfänger (9), der sich in der Fahrzeugbreitenrichtung hinter der Schutzstange (8) erstreckt,
**dadurch gekennzeichnet, dass** der Tank (3) über einer unteren Fläche (32) des Stoßfängers (9) angeordnet ist.

5. Fahrzeugaufbaustruktur nach einem der Ansprüche 1 bis 4, die ferner Folgendes umfasst:
ein Auspuffrohr (24), das an einer dem Tank (3) entgegengesetzten Seite in der Fahrzeugbreitenrichtung mit dem dazwischen angeordneten Reservereifen (7) angeordnet ist.

6. Fahrzeugaufbaustruktur nach einem der Ansprüche 1 bis 5, die ferner Folgendes umfasst:
eine Wassereinspritzöffnung (16), die an einer gleichen Seite des Fahrzeugs (10) wie die Seite angeordnet ist, an der der Tank (3) angeordnet ist, und in einem verbundenen Zustand mit einem Inneren des Tanks (3) verbunden ist.

## Revendications

1. Structure de carrosserie de véhicule équipée d'un bâti (1) et d'une carrosserie (11) comprenant :
un pneu de secours (7) qui est fixé sur le bâti (1) ; et
un réservoir (3) pour stocker un additif pour la purification d'échappement d'un véhicule (10), qui est disposé entre le bâti (1) et un panneau externe (4) formant une surface externe de la carrosserie (11), le réservoir (3) étant disposé derrière un logement de roue (6) du véhicule (10) et au-dessus d'une surface inférieure (31) du pneu de secours (7),
**caractérisée en ce qu'**elle comprend en outre :
un bouclier (12) qui est prévu sur une surface interne du logement de roue (6) afin de former une ouverture (13) à travers laquelle le réservoir (3) peut passer en face du réservoir (3) ; et
un panneau de jupe (14) qui ouvre et ferme l'ouverture (13).

2. Structure de carrosserie de véhicule selon la revendication 1, comprenant en outre :
une barre de protection (8) qui s'étend dans le sens de la largeur du véhicule derrière et au-delà du réservoir (3) et est fixée sur le bâti (1).

3. Structure de carrosserie de véhicule selon la revendication 1 ou 2, comprenant en outre :
un support (2) qui supporte le réservoir (3) sur le bâti (1).

4. Structure de carrosserie de véhicule selon l'une quelconque des revendications 1 à 3, comprenant en outre :
un pare-chocs (9) qui s'étend dans le sens de la largeur du véhicule derrière la barre de protection (8),
**caractérisée en ce que** le réservoir (3) est disposé au-dessus d'une surface inférieure (32) du pare-chocs (9).

5. Structure de carrosserie de véhicule selon l'une quelconque des revendications 1 à 4, comprenant en outre :
un tuyau d'échappement (24) qui est disposé sur un côté opposé au réservoir (3) dans le sens de la largeur du véhicule avec le pneu de secours (7) intercalé entre eux.

6. Structure de carrosserie de véhicule selon l'une quelconque des revendications 1 à 5, comprenant en outre :
un orifice d'injection d'eau (16) qui est disposé du même côté du véhicule (10) que le côté où le réservoir (3) est disposé, et est raccordé à un intérieur du réservoir (3) dans un état de communication.
